Europäisches Patentamt

European Patent Office

Office européen des brevets

(19)

(11) EP 1 292 077 A2

(12) **EUROPEAN PATENT APPLICATION**

(43) Date of publication:
12.03.2003 Bulletin 2003/11

(51) Int Cl.[7]: H04L 25/03

(21) Application number: 02256281.3

(22) Date of filing: 11.09.2002

(84) Designated Contracting States:
AT BE BG CH CY CZ DE DK EE ES FI FR GB GR
IE IT LI LU MC NL PT SE SK TR
Designated Extension States:
AL LT LV MK RO SI

(30) Priority: 11.09.2001 US 322367 P
15.10.2001 US 329597 P

(71) Applicant: Broadcom Corporation
Irvine, CA 92618-3616 (US)

(72) Inventor: Chen, Yue
Sunnyvale, California 94087 (US)

(74) Representative: Wombwell, Francis et al
Potts, Kerr & Co.
15, Hamilton Square
Birkenhead Merseyside CH41 6BR (GB)

(54) **Sequence estimation for PSK signals**

(57) Methods and circuits for equalizers having a trellis with a reduced number of states and employing a partial retrace and tentative trace back procedure that simplifies the circuitry needed to perform metric calculations and to store the results. Exemplary embodiments also provide soft decisions. These soft decisions may be adaptively scaled by the estimated signal to noise ratio (SNR). Initial and final states may be programmably designated.

FIG. 1

**Description**

**CROSS-REFERENCES TO RELATED APPLICATIONS**

This application claims the benefit of United States provisional application number 60/322,367, filed September 11,2001, and United States provisional application number 60/329,597, filed October 15,2001, both of which are incorporated by reference.

**BACKGROUND**

The present invention relates to maximum likelihood sequence estimators utilized by receivers in communications systems to mitigate intersymbol interference caused by dispersive communication channels.

A well known problem in communication systems is intersymbol interference induced on a digital communication waveform by dispersive properties of a transmission channel.

In most wireless communication systems, a transmitter radiates its output signal in multiple directions. This radiated signal reflects off buildings, windows, and other surfaces. A receiver therefore receives data that has traveled in a varioty of routes. For example, an individual transmitted symbol may reach the receiver by traveling in a straight line, by reflecting off a building, and by first reflecting off a body of water. This means that the same symbol travels from transmitter to receiver by at least three paths. This is referred to as multipath.

The result of multipath is that each symbol is in effect smudged in time, that is, each symbol sent by the transmitter blurs into adjacent symbols. Therefore, the received waveform at any given time is dependent on some number of previous symbols. This is known as intersymbol interference.

A class of equalizers, known as Maximum Likelihood Sequence Estimators (MLSE) has been developed to correct this intersymbol interference. Many of these equalizers incorporate what is known as the Viterbi Algorithm for use in determining the most likely sequence. But this Algorithm is very computationally intensive and requires a great deal of memory which must be integrated onto a VLSI chip designed to include an MLSE. Therefore what is need are improvements resulting in reduced memory requirements and simpler computational complexity, without sacrificing accuracy. Soft outputs that indicate the reliability of the data and that can be scaled are also desirable.

**SUMMARY**

Accordingly, exemplary embodiments of the present invention provide an equalizer having a trellis with a reduced number of states and employing a partial retrace and tentative trace back procedure that simplifies the circuitry needed to perform metric calculations and to store the results. Exemplary embodiments also provide soft decisions. These decisions may be adaptively scaled by the estimated signal to noise ratio (SNR). Also, initial and final states may be programmably designated.

An exemplary embodiment of the present invention provides a method of receiving data. The method includes receiving input data with an equalizer, performing forward metric computations using a reduced state trellis, performing backward metric computations using the reduced state trellis, adding the forward metric computations to the backward metric computations to generate a joint metric, and selecting a minimum joint metric for each symbol in the reduced state trellis.

Another exemplary embodiment of the present invention provides a method of receiving data. This method includes receiving input data with an equalizer, determining an estimated signal to noise ratio, generating a soft decision indicating the reliability of a hard decision, and scaling the soft decision with the estimated signal to noise ratio.

Yet a further exemplary embodiment of the present invention provides an integrated circuit. The integrated circuit includes an equalizer configured to receive input data and provide hard and soft decisions, and an adaptive scaling factor circuit coupled to the equalizer. The adaptive scaling factor circuit provides a signal related to an estimated signal to noise ratio, and the equalizer scales the soft decisions based on the provided signal.

A better understanding of the nature and advantages of the present invention may be gained with reference to the following detailed description and the accompanying drawings.

**BRIEF DESCRIPTION OF THE DRAWINGS**

Figure 1 is a block diagram illustrating a portion of a receiver including an equalizer consistent with embodiments of the present invention;

Figure 2 is a flow chart illustrating the functions of an equalizer, such as the equalizer in Figure 1 or similar equalizers in other embodiments of the present invention;

Figure 3 is a chart showing the parameters used to initialized an equalizer in a specific embodiment of the present invention;

Figure 4 is a flow chart illustrating a forward trace procedure that may be used by embodiments of the present invention;

Figure 5 shows two stages of a conventional Viterbi trellis;

Figure 6 illustrates the equations used to calculate metrics by a specific embodiment of the present invention;

Figure 7 is a further illustration of these equations as applied to the left side data;

Figure 8 is a further illustration of these equations as applied to the right side data;

Figure 9A illustrates a tentative trace back memory that is used by a specific embodiment of the present invention, and Figure 9B illustrates a tentative hard decision register that is used to store tentative hard decisions by that embodiment;

Figure 10 is a block diagram of a five tap feed-forward finite impulse response filter that forms a portion of a pre-filter in a specific embodiment of the present invention;

Figure 11 is a block diagram of a five tap feed back FIR filter that forms another portion of the pre-filter in the specific embodiment of the present invention;

Figure 12 is a flowchart illustrating a backward trace performed by an embodiment of the present invention; and

Figure 13 is an illustration of a backward trace consistent with an embodiment of the present invention;

Figure 14 illustrates the equations used for final hard and soft decisions by an embodiment of the present invention;

Figure 15 provides a table for format mapping that is used by a specific embodiment of the present invention; and

Figure 16 is a table showing the mapping of modulating bits to a symbol that is used by a specific embodiment of the present invention.

## DESCRIPTION OF EXEMPLARY EMBODIMENTS

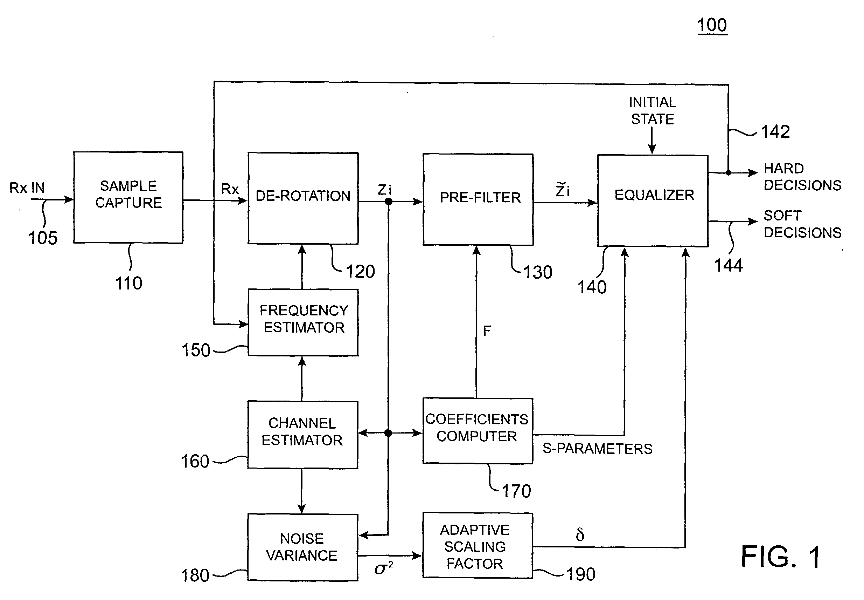

Figure 1 is a block diagram illustrating a portion of a receiver including an equalizer consistent with embodiments of the present invention. This figure, as with all the included figures is shown for exemplary purposes only, and does not limit either the possible embodiments of the present invention or the claims.

Included are a sample capture circuit 110, derotation circuit 120, pre-filter 130, equalizer 140, frequency estimator 150, channel estimator 160, coefficients computer 170, noise variance circuit 180, and adaptive scaling factor circuit 190. The sample capture circuit 110 receives an input RXIN on line 105 and provides samples to the derotation block 120. While embodiments of the present invention are useful in many applications such as wireless communication, recording, and the like, it is of particular value in GSM or EDGE receivers. Accordingly, in a specific embodiment, RXIN is a burst signal that is consistent with the GSM or EDGE standards. Also, the specific embodiment substantially implements the equalizer in hardware, while a substantial portion of the remaining circuits are implemented in software.

In this specific embodiment, for each received burst, 156 real and imaginary samples are buffered for further processing. Each sample is a 12-bit word that is sign extended to 16 bits by the baseband finite impulse response (PER) filter. The received samples are expressed as:

| Real part of a burst | $x_i, i=0,...,155.$ |
|---|---|
| Imaginary part of a burst | $y_i, i=0,...,155.$ |

The received samples are derotated by the derotation circuit 120. Specifically, phase errors associated with the incoming signals are reduced or eliminated, and an 8psk phase derotation of $3\pi/8$ radians per symbol is applied. In the specific embodiment, the resultant 156 real and imaginary rotated samples, *I and* Q, remain 16-bit words. The received samples may be derotated by the following procedure:

A sine table is generated:

$$Table(i) = round(2^{15} * \sin(2 * \pi * (\frac{i}{512} + \frac{1}{1024}))), \ i = 0, 1, ..., 511.$$

The look-up sine table is used:

$$\delta = (2^{19} + ceil((-0.1875 - \hat{\Delta f}/r_s) * 2^{19})) \ mod \ 2^{19},$$

$$cos(\theta) = Table(fix(\delta*i/1024 + 128)\ mod\ 512),$$

$$sin(\theta) = Table(fix(\delta*i/1024)\ mod\ 512),$$

where $\hat{\Delta\gamma}$ is estimated frequency offset. $r_g$ is the symbol rate with the value of *13/48* MHz. *i* = 0,1, ..., 155.

The incoming samples are then derotated:

$$I_i = (x_i*cos(\theta) - y_i*sin(\theta))>>\ 15,$$

$$Q_i = (x_i*sin(\theta) + y_i*cos(\theta))>>15,$$

where *i* = 0, 1, ..., 155.

The frequency offset is the difference between the frequency of the received data and a local clock available to the receiver. An example of a frequency estimator 150 and derotation circuit 120 may be found in co-pending United States patent application number 10/—.—. titled Frequency Offset Correction Circuit for WCDMA, filed August 26, 2001, which is incorporated by reference.

Again, in GSM systems, signals are transmitted by bursts. The wireless channel can be considered to be quasi-stationary within a burst. For such a channel, its impulse response can be estimated during a training period. Based on the property of GSM training sequences, the center 16 symbols of the training sequence can be used for correlations of the received midamble to estimate the channel impulse response. With the 16 center training sequence symbols used as a local correlation reference, correlations can performed by the channel estimator 160 on the training sequence symbols of the real and imaginary samples *I* and *Q* as follows:

The following correlations are done:

$$C_i^I = \tfrac{1}{16}\sum_{j=0}^{15} t_{s+j} * I_{j+i+start},\ i = 0,\ ...,\ R$$

$$C_i^Q = \tfrac{1}{16}\sum_{j=0}^{15} t_{s+j} * Q_{j+i+start},\ i = 0,\ ...,\ R$$

where $(C_i^I, C_i^Q)$ are real and imaginary parts of correlations. $t_i$ is the *ith* symbol of the training sequence. *start = 70 - R/2*. Typically, *R = 14*.

The set of m contiguous correlations that have maximum energy are selected and designated as the estimated channel.

$$E_i = \sum_{j=0}^{m-1} \{[C_{i+j}^I]^2 + [C_{i+j}^Q]^2\},\ i = 0,\ ...,\ R\text{-}m\text{-}1$$

$$E_{i^*} = \max_{all\ i}\{E_i\} = S_0$$

where *i\** is the timing offset. Typically, *m=7*.

After finding the maximum value $S_0$, the *k*th path $(h_k^I, h_k^Q)$ of the estimated channel impulse response can be obtained as follows:

$$h_k^I = C_{k+i^*}^I\ \text{real part}$$

$$h_k^Q = C_{k+i^*}^Q,\ \text{imaginary part,}$$

in which $k$ = 0, ..., $m$-1.

The noise variance circuit 180 receives the derotated input signal, determines the noise variance, and provides it to the adaptive scaling factor circuit 190. The received signal noise variance $\sigma^2$ can be estimated by passing the midamble through estimated complex channel impulse response and subtracting from the received midamble to obtain the estimated complex noise sequence. The noise sequence power is then averaged over 16 samples to obtain the variance estimate.

$$\hat{I}_i^t = \sum_{j=0}^{m-1} t_{i+6-m+j} * h_{m-1-j}^I \; , \; i = 0, \, ..., \, 16$$

$$\hat{Q}_i^t = \sum_{j=0}^{m-1} t_{i+6-m+j} * h_{m-1-j}^Q \; , \; i = 0, \, ..., \, 16$$

$$n_i^I = \hat{I}_i^t - I_{t+i}^{*}{}_{+start\_m+1}, \; i = 0, \, ..., \, 16$$

$$n_i^Q = \hat{Q}_i^t - Q_{i+i}^{*}{}_{+start-m+1}, \; i = 0, \, ..., \, 16$$

$$\sigma^2 = \tfrac{1}{16} \sum_{i=0}^{16} (n_i^I)^2 + (n_i^Q)^2,$$

where $t_j$ is the training sequence (26 bits for normal burst, 64 bits for SCH burst).

The coefficients computer 170 generates and provides pre-filter coefficients to the pre-filter 130 and S parameters to the equalizer 140. The pre-filter coefficients and S-parameters are calculated based on the following equations:

S-parameters:

S = [1 $b_1$ $b_2$], for 64 state MLSE equalizer

Feedback filter coefficients:

$$B = [b_1 \; b_2 \; b_3 \; b_4 \; b_5] = -P^{-1}q$$

Feed-forward-filter coefficients:

$$W^T = [0_{1,d} \; 1 \; b^T \; 0_{1,5-d}] \cdot H^T \, (HH^T + \sigma^2)^{-1}$$

Mean square error:

$$mse = p - q^T P^{-1} q$$

where $\sigma^2$ is the estimated noise variance.

$$\mathbf{H} = \begin{bmatrix} h_0 & \cdots & h_6 & \cdots & 0 \\ & & \ddots & & \\ & & h_0 & \cdots & h_6 \end{bmatrix}$$

$$\begin{bmatrix} p & q \\ q & P \end{bmatrix} = [0_{6,d} \ I_6 \ 0_{6,S-d}] \cdot (I + H^T \sigma^{-2} H)^{-1} \begin{bmatrix} 0^T_{6,d} \\ I_6 \\ 0^T_{6,S-d} \end{bmatrix}$$

$h_i$, i =0, ..., 6, is the estimated channel profile.

After obtaining the coefficients and S-parameters, they are transferred to integer values by the following:

S-parameters: $S_{int}$ = round($S$ x 128)
Feedback filter: $B_{int}$ = round(B x 128)
Feed-forward filter: $W_{int}$ = round($W$x $2^{17}$ x 7)

More on these calculations can be found in Paul A. Voois, Inkyu Lee and John M. Cioffi, "The effect of decision delay in the finite-length decision feedback equalization", *IEEE Trans. Information Theory,* Vol. 42, No. 2, March 1996, which is incorporated by reference.

The calculation of the DFE coefficients accounts for both forward and time-reverse equalization. The selection of the DFE direction is based on the MMSE. More on this can be found in Hanks H. Zeng, Ye (Geoffrey) Li, etc. "A 2-stage soft-output equalizer for EDGE", IEEE WCNC 2000, which is incorporated by reference.

The adaptive scaling factor circuit 190 receives the noise variance $\sigma^2$ and provides the scaling factor $\delta$ to the equalizer 140. The pre-filter130 receives the derotated samples and provides an output to the equalizer 140. The equalizer 140 receives the pre-filtered, derotated samples, the S parameters, and the adaptive scaling factor, as well as initial state information, and provides hard decisions on lines 142 and soft decisions on lines 144 to a channel decoder. The hard decisions on line 142 are also provided to the frequency estimator 150.

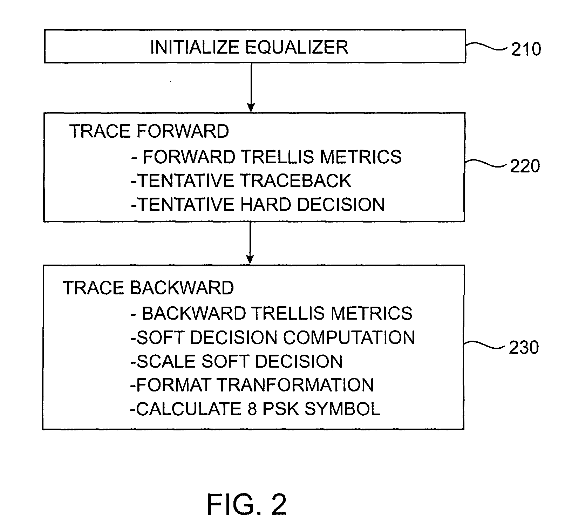

Figure 2 is a flow chart illustrating the functions of an equalizer, such as the equalizer 140 in Figure 1 or similar equalizers in other embodiments of the present invention. In act 210, the equalizer is initialized. In act 220, the forward trace is performed. This involves calculating the forward trace metrics, doing tentative trace backs, and generating tentative hard decisions. When the forward trace is complete, a backward trace is commenced in act 230. This involves calculating the backward trace metrics, generating soft decisions, scaling those soft decisions, transforming the format of the data, and calculating the 8PSK symbols that were received. It will be appreciated by one skilled in the art that this flow may be modified consistent with embodiments of the present invention. For example, the soft decision computations may be performed during the forward trace. Alternately, the symbol calculations may be completed following the backward trace.

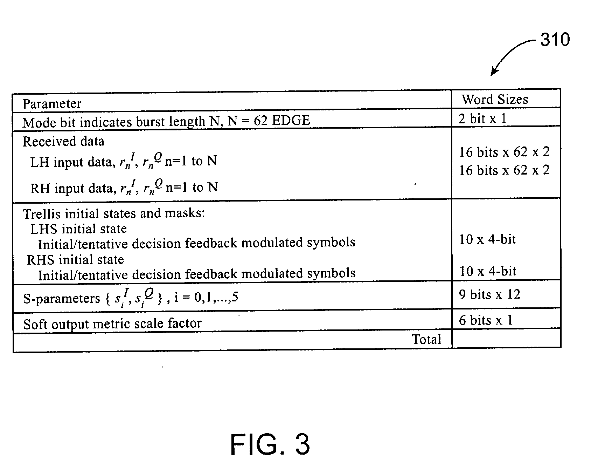

Figure 3 is a chart showing the parameters used to initialized the equalizer 140 during act 210. The equalizer receives data indicating the length of the data bursts, for example, the length of the burst is 62 symbols for EDGE. The equalizer also receives left-hand and right-hand data, that is, data preceding and subsequent to the midamble training bits. Again, the equalizer receives the S parameters and soft outputs metrics scale factor. Exemplary word sizes are given in column 310 for a specific embodiment of the present invention.

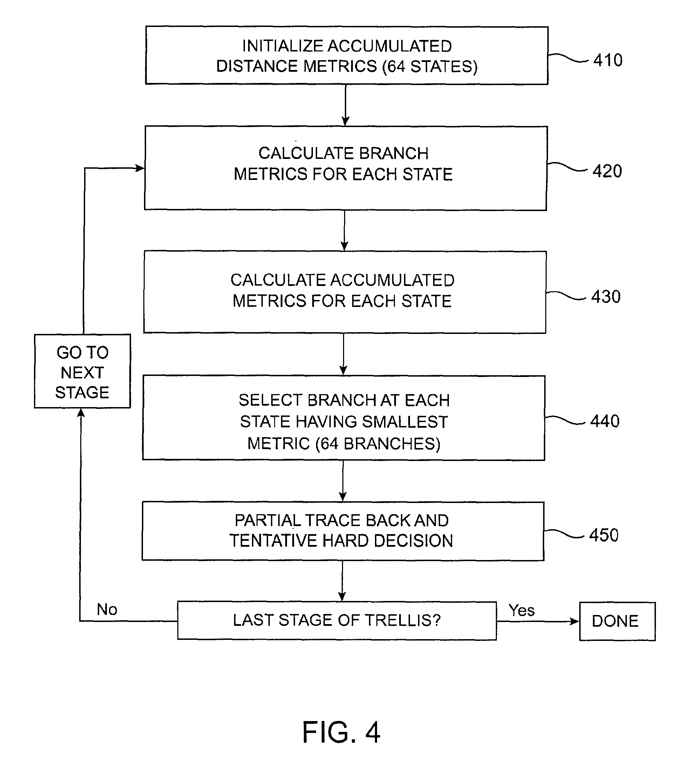

Figure 4 is a block diagram illustrating the forward trace 220 of Figure 2, and similar forward trace procedures in other embodiments of the present invention. In act 410 the accumulated distance metrics at each state of the trellis are initialized. This initialization may include setting the metrics at all states equal to zero. Alternately, the initial metrics at some states may be set to a very high value, such that later-selected best paths do not terminate at that state. These invalid states may be determined by an initial state and initial state mask, or by knowing the identity of tail or training symbols. An example of using initial and final symbols can be found in co-pending application number 09/636,000, titled Maximum Likelihood Sequence Estimator Which Computes Branch Metrics in Real Time, filed August 9, 2000, which is incorporated by reference.

In act 420 the branch metrics for each state are calculated. Accumulated metrics are calculated for each state in act 430. By using a reduced state trellis and calculating partial ISIs, the complexity of these operations and the circuitry required can be greatly reduced.

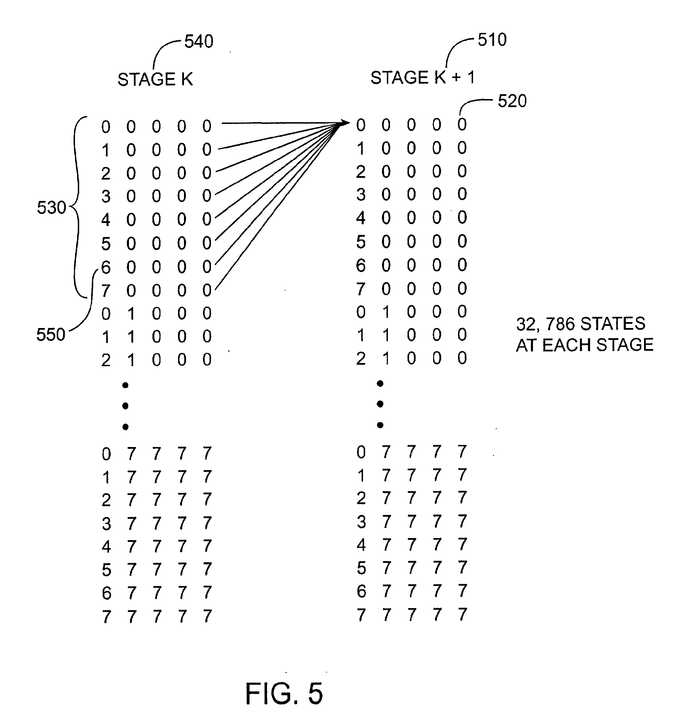

To illustrate this, Figure 5 shows two stages of a conventional Viterbi trellis. For an EDGE application, a full trellis includes 62 stages, only two are shown for clarity. In this particular example, the constraint length, or a channel memory length is 5 symbols long. That is, intersymbol interference is such that four preceding symbols interfere with, or effect the value of a current symbol. Also in this particular example, each symbol is one of eight, that is, the alphabet includes 8 symbols. This means that each symbol corresponds to 3 bits.

The state of the channel can thus be described as a series of five symbols. Specifically, the currently received symbol plus the 4 previous and interfering symbols. As the next symbol is received, the previously received symbol is now an interfering symbol, and the last of the previously interfering symbols is no longer needed to define the channel.

Specifically, at stage K+1510 in Figure 5, a received symbol 520 may be a zero. In that case, states 530 at stage K 540 are the possible predecessor states. For example state 550 could have been the previous state, that is, its corresponding branch may have the lowest distance metric. As a new symbol having a value of 0 is received, the 4 previously received zeros are interfering symbols, and the symbol 6 is no longer required to define the state K+1.

The drawback of this simple approach is that at each stage there is 8 to the power of five, or 32,786 states. Each current state and has 8 possible predecessor states. During the forward trace, for each current state, the accumulated metrics for each of the 8 to incoming branches are compared, and the lowest is selected. Accordingly, this approach requires storing accumulated metrics for all 32,786 states.

In a specific embodiment of the present invention, the channel constraint or memory L is equal to five and the alphabet is 8. But instead of 32,786 states, the trellis has a reduced number, for example, there are 64 states in a specific embodiment. In a full trellis, branch metrics are added to previous state metrics, and a comparison is made. In a reduced state trellis, best path metrics are added to a previous state metric.

Specifically, an accumulated metric $J_k$ (which in one embodiment is 16 unsigned bits) at a given state at time $k$ can be expressed as

$$J_k = \min_{a_{k-3}} \{ J_{k-1} + M_k \} - J_{k-1}^{min}$$

(Equation 1)

$$J_k = 65535, \text{if } J_k > 65535.$$

$$J_k^{min} = \min_{\substack{all\ states \\ at\ time\ k}} (J_k)$$

Where $J_k^{min}$ is the minimum value among all state accumulated metric at time k-1. n=0....7, corresponding to index of 8 possible values of $\bar{a}_{k-2}$.

The branch metric is defined as:

$$M_k = |D_k|^2$$

$$D_k = (r_k - \sum_{i=0}^{2} \tilde{a}_{k-i} s_i - \tilde{r}_k) >> 6 \ .$$

$$\tilde{r}_k = \sum_{i=3}^{2} \tilde{a}_{k-i} s_i$$

$$D_k = \begin{cases} 127 & if\ D_k > 127 \\ -127 & if\ D_k < -127 \end{cases} \ .$$

Where $s_i = \{s_i^I, s_i^Q\}$, $i = 0,1,...,5$.

$r_i = \{r_i^I, r_i^Q\}$, $i = 0,1, ..., 62$, received signals

$\bar{r}_i = \{\bar{r}_i^I, \bar{r}_i^Q\}$, $i = 0,1, ..., 62$, reconstructed partial ISI.

$a_i = \{a_i^I, a_i^Q\}$, an 8PSK constellation point.

$d_i = 0, 1, ..., 7$, hypothesized data sequence associated with a state or trellis branch.

'*' represents the conjugate.

$\tilde{a}_i$ is the tentative hard decision or the initial feedback symbol, $\tilde{a}_{k-s}$ is the symbol corresponding to the state that has the minimum accumulated metric at time k-1 and $\tilde{a}_{k-s}$ is the symbol tracing back one step from the current state.

In act 440, the branches having the smallest metric at each state are selected. For a given trellis with L memories, in one example 5, there are the $8^{L-1}$ best paths through branch k-1, denoted by $\tilde{d}_1\tilde{d}_2...\tilde{d}_{k-L}\tilde{d}_{k-(L-1)}...\tilde{d}_{k-1}$, where $d_{k-(L-1)}... d_{k-1}$ denotes one of the $8^{L-1}$ state vectors and $\tilde{d}_1\tilde{d}_2,...\tilde{d}_{k-L}$ are the best path "memories" or tentative decision for that state. Given the corresponding path metrics to the point, $J_{k-1}(d_{k-1},...,d_{k-(k-1)})$, the best paths to each state through branch k are determined by the following minimization,

$$J_k(d_k, d_{k-1}, \cdots, d_{k-(L-2)}) = \min \begin{cases} J_{k-1}(d_{k-1}, \cdots, d_{k-(L-2)}, 0), \\ \quad + M_k(r_k : d_k, d_{k-1}, \cdots, d_{k-(L-2)}, 0), \\ \cdots \\ J_{k-1}(d_{k-1}, \cdots, d_{k-(L-2)}, 7) \\ \quad + M_k(r_k : d_k, d_{k-1}, \cdots, d_{k-(K-2)}, 7), \end{cases}$$

$$d_k = 0, 1, ... 7$$

$$\hat{J}_k = J_k >> 3$$

$\hat{J}_k = 4095$, if $\hat{J}_k > 4095$ (unsigned 12 bits).

If the ith branch has the minimum value, the resulting path memory symbol is $d_{k-(L-1)}=i$ for the given state. In a specific embodiment of the present invention, this value is stored in a tentative trace back to memory.

After obtaining $J_k$, a specific embodiment downshift it by 3 bits and saves it as a 12 bit word to a trace back memory for future use. In the specific embodiment, the size of the trace back memory is 58 X 64 X 12, where 58 is at the number of stages in the trellis, 64 is the number of state at each stage, and this memory is shared with the GSM equalizer traceback memory. In this embodiment, the valid states are initialized to zero, otherwise they are given a value of 16383.

The above is used to make tentative hard decisions in act 450. The above acts 420-450 are repeated for each stage of the trellis.

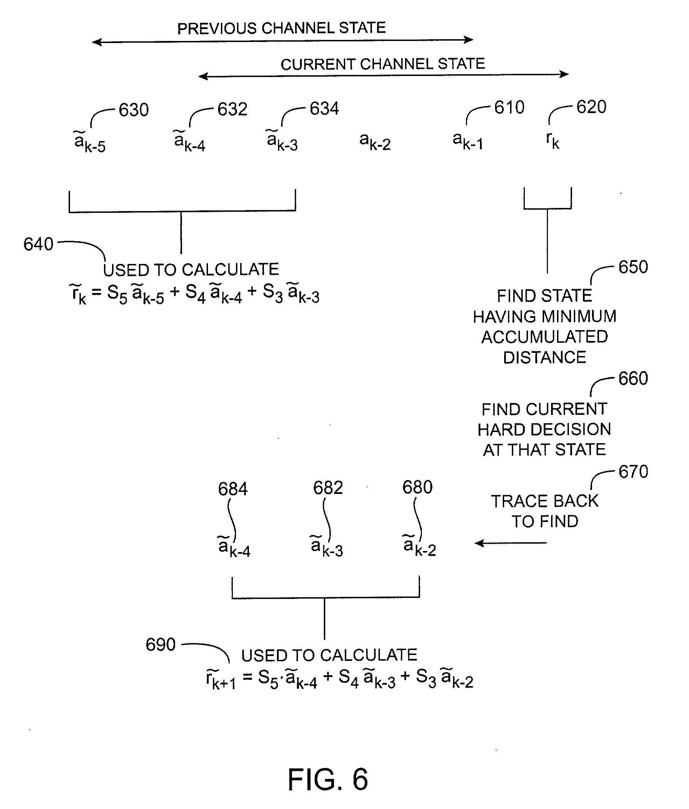

Figure 6 illustrates the above equations. During a previous state 610, hard decisions $\tilde{a}_{k-5}$ 630, $\tilde{a}_{k-4}$ 632, and $\tilde{a}_{k-3}$ 634 are used to calculate $\bar{r}_k$ as indicated at 640. This value is used at the current stage 620 to determined the state having the minimum accumulated distance 650. The current hard decision for that state is found 660. A partial trace back 670 is performed to find hard decisions $\tilde{a}_{k-2}$ 680, $\tilde{a}_{k-3}$ 682, and $\tilde{a}_{k-4}$ 684. These hard decisions are then used to calculate $\bar{r}_{k+1}$ as indicated at 690. This value is then used at the next stage to determined the state having the minimum accumulated distance.

A specific embodiment of the present invention uses a 58 X 15-bit memory to store the partial reconstructed ISIS $\bar{r}_0$ through $\bar{r}_{58}$. These are stored for use to calculate the branch metrics during the backward trace. To save memory, a specific embodiment stores $r_k - \bar{r}_k$ in the received memory.

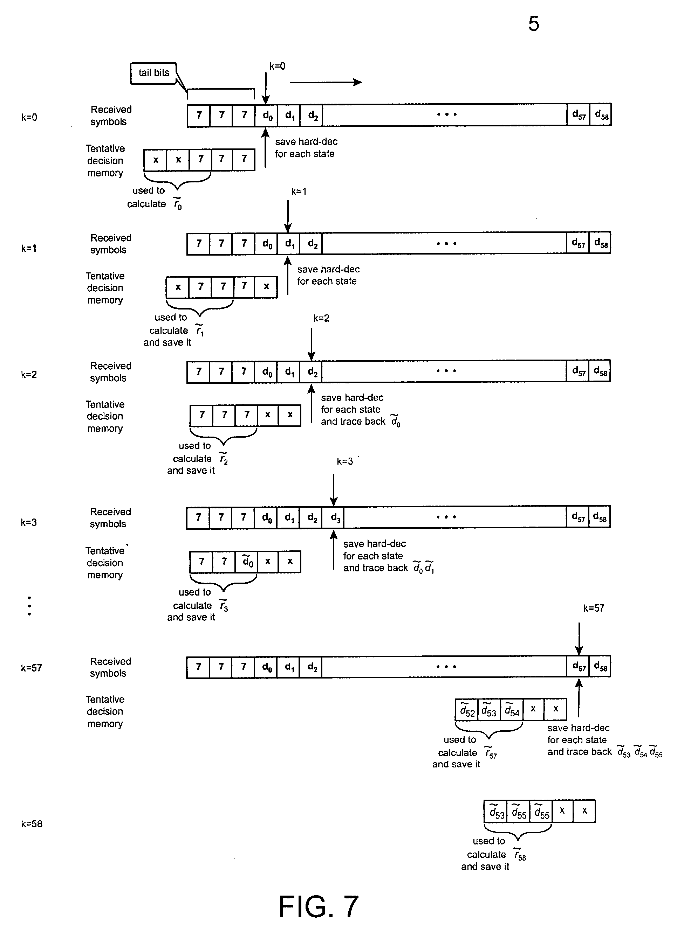

Figure 7 is a further illustration of these equations as applied to the left side data. A specific embodiment of the present invention separates the left side data from the right side data and processes them as two separate trellis computations. At k=0, the previous tail bits are known and can be used to calculate $\bar{r}_0$. The hard decision for each state at stage 0 is saved. At this time, there is no need to perform a trace back since the tail bits are known. At time k=1, $\bar{r}_1$ is calculated and is used to determined the hard decision for each state at stage 1. At time k=2, $\bar{r}_2$ is calculated and is used to determined the hard decision at each state of stage 2. A trace back is done to find $\tilde{d}_0$. At time k=3, $\bar{r}_3$ is calculated and is used to determined the hard decision at each state of stage 3. A trace back is done to find $\tilde{d}_0$ and $\tilde{d}_1$. This process

continues to the end of the trellis as indicated.

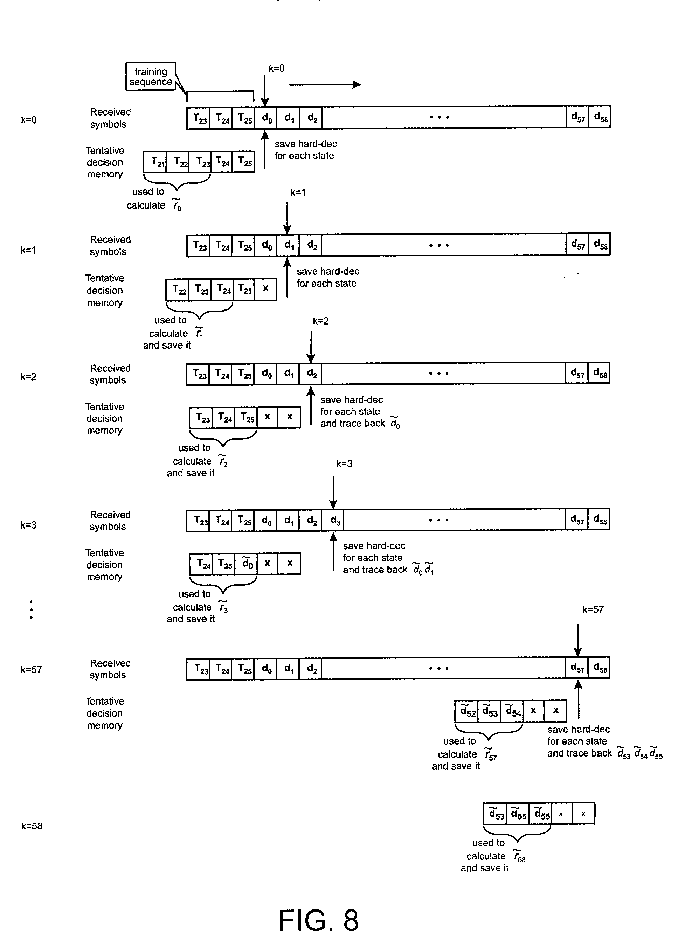

Figure 8 is a further illustration of these equations as applied to the right side data. At k=0, the previous tail bits are known and can be used to calculate $r_0$. The hard decision for each state at stage 0 is saved. At this time, there is no need to perform a trace back since the tail bits are known. At time k=1, $\tilde{r}_1$ is calculated and is used to determined the hard decision for each state at stage 1. At time k=2, $\tilde{r}_2$ is calculated and is used to determined the hard decision at each state of stage 2. A trace back is done to find $\tilde{d}_0$. At time k=3, $\tilde{r}_3$ is calculated and is used to determined the hard decision at each state of stage 3. A trace back is done to find $\tilde{d}_0$ and $\tilde{d}_1$. This process continues to the end of the trellis as indicated.

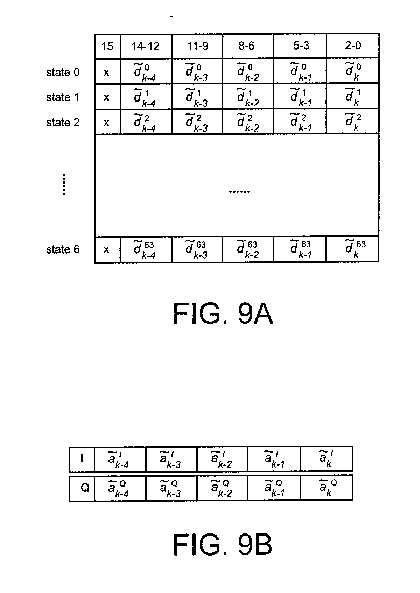

Figure 9A illustrates a tentative trace back memory that is used by a specific embodiment of the present invention. Figure 9B illustrates a tentative hard decision register that is used to store tentative hard decisions by that embodiment.

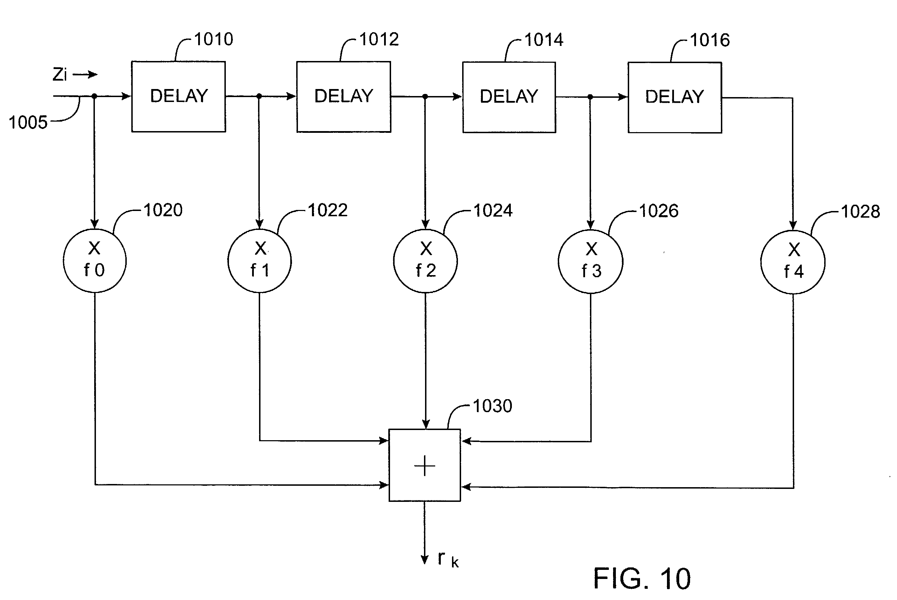

Figure 10 is a block diagram of a five tap feed-forward finite impulse response (FIR) filter that forms a portion of the pre-filter 130 in a specific embodiment of the present invention. Included are delay elements 1010, 1012, 1014, and 1016, multipliers 1020, 1022, 1024, 1026, and 1028, and adder 1030. Data it is received on line 1005, delayed, multiplied, and added as indicated.

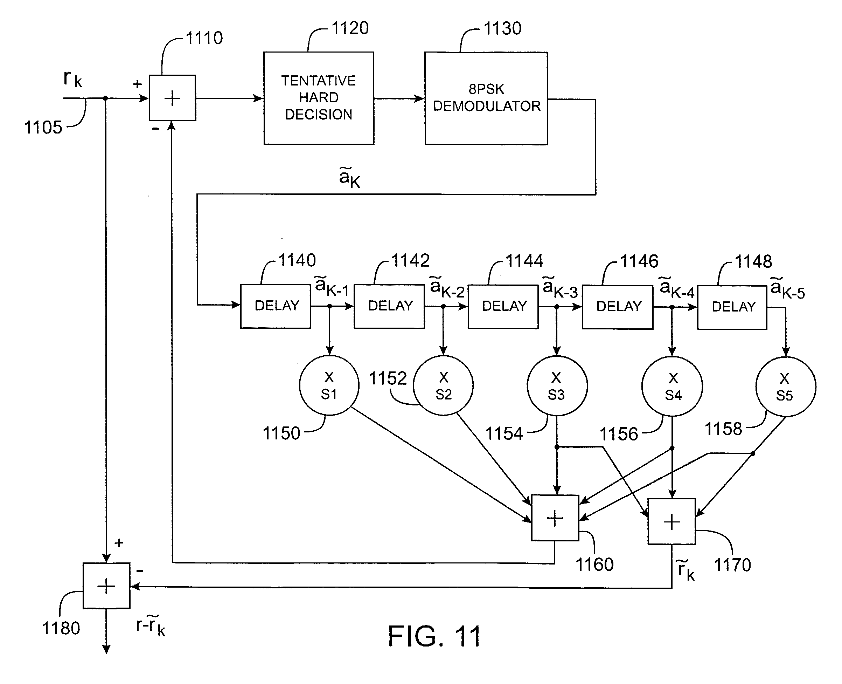

Figure 11 is a block diagram of a five tap feed back FIR filter that forms another portion of the pre-filter 130 in the specific embodiment of the present invention. Included are summing junctions 1110, 1160, 1170, and 1180, tentative hard decision circuit 1120, PSK demodulator 1130, delay blocks 1140, 1142, 1144, 1146, and 1148, multipliers 1150, 1152, 1154, 1156, and 1158. The input signal from the feed forward filter is received on line 1105. The output of the five tap feed back filter is subtracted from the input signal by summing junction 1110. Tentative hard decisions are made, and demodulated before being received by the input of the five tap feed back filter. Summing junction 1170 provides $\tilde{r}_k$, which is subtracted from the received signal by summing junction 1118 and stored to memory as described above.

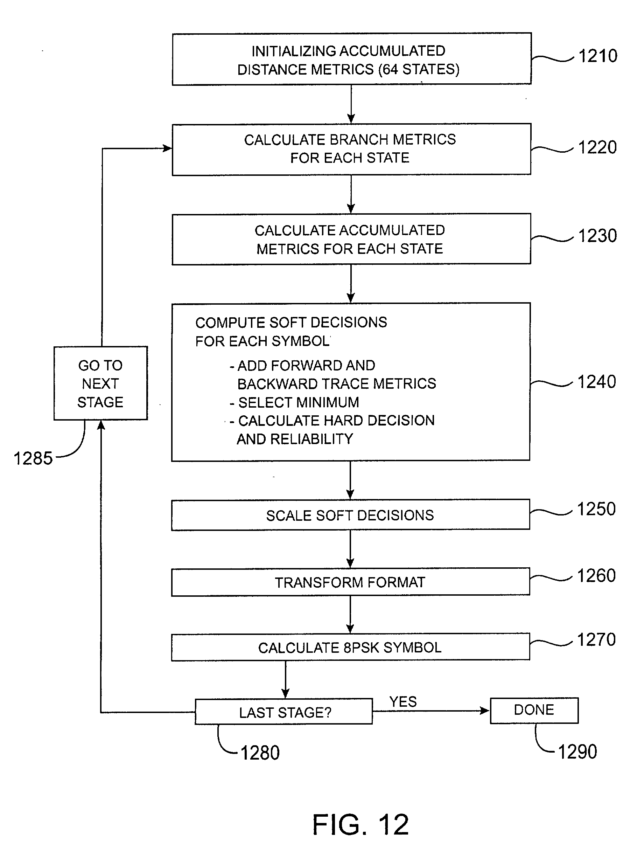

Figure 12 is a flowchart illustrating a backward trace, such as the backward trace 230 in Figure 2, performed by an embodiment of the present invention. In act 1210, the accumulated distance metrics at each state are initialized. In act 1220, the branch metrics for each state are calculated. The accumulated metrics for each state are calculated in act 1230. In act 1240, a soft decision is computed for each symbol. This can be done by adding the forward and the backward trace metrics, selecting the minimum, and calculating resulting hard decision and reliability of that hard decision. In act 1250, the soft decision is scaled. Additionally, the format may be transformed in act 1260, and an 8PSK symbol calculated in act 1270. This sequence is repeated through each stage of the trellis, beginning at the last stage and moving backward through the trellis.

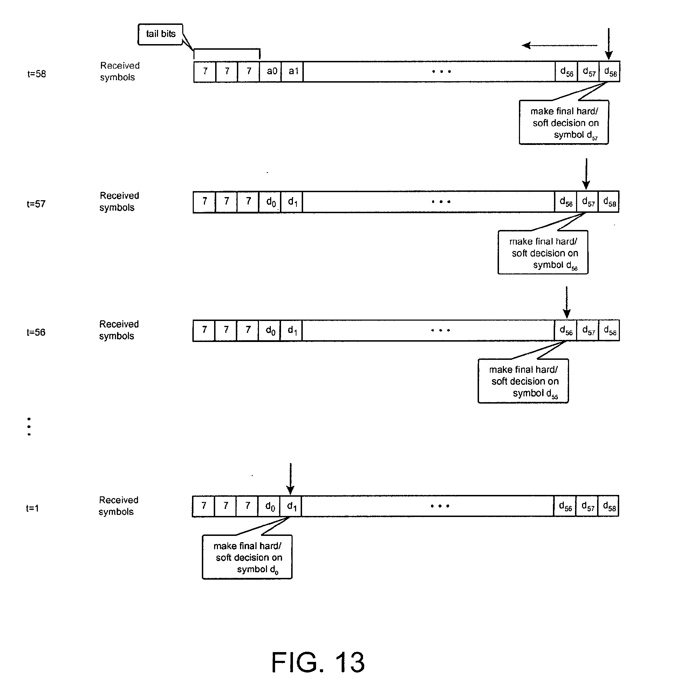

Figure 13 is an illustration of a backward trace consistent with an embodiment of the present invention. The backward trace starts at time k=58. The initial value of the accumulated distance is 0 for all states. Alternately, valid and invalid state may be initialized with different values. The accumulated metric for a given state at time k can be calculated using Equation 1 from above. The partial ISI $\tilde{r}_k$ that was previously obtained and stored may be used in this calculation.

After obtaining all 64 accumulated distances at time k, the final hard decision and corresponding soft decision or reliability may be found. First, the symbol reliability may be found:

For a given symbol $d$, there are 8 states xi=d*8+i, i=0, 1,...7.

Calculate 8 accumulated distances based on the following equation:

$$J_k(x_i) = \hat{J}^F_{k-1}(x_i) + \hat{J}^B_k(x_i)$$

where $\hat{J}^F$ is the scaled accumulated distance of the forward trace stored in the trace back memory.
$\hat{J}^B_k = J^B_k >> 3$ : the scaled accumulated distance of the backward trace.
$\hat{J}^B_k = 4095$, if $J^B_k > 4095$ (unsigned 12 bits).

Select the one that has the minimum accumulated distance as the reliability of the symbol $d$, denoted as *P(d)*.

Second, the bit hard decision and its reliability may be found:

An 8PSK symbol $d$ can be represented by throe bits, $b_0$, $b_1$, and $b_2$.

Bit 0:   S_0 = |min(*P(0),P(1),P(2),P(3))* - min(*P(4),P(5),P(6),P(7))*| If min *(P(0),P(1),P(2),P(3)) < min(P(4),P(5),P(6), P(7))*, then $b_0$ = 0; Else $b_0$ = 1.

Bit 1:   S_1 = |min(*P(0),P(1),P(4),P(5)) - min(P(2),P(3),P(8),P(7))* | If min(*P(0),P(1),P(4),P(5)) < min(P(2),P(3),P(6), P(7))*, then $b_1$ = 0; Else $b_1$ = 1.

Bit 2:   S_2 = |min(*P(0),P(2),P(4),P(6)) - min(P(1),P(3),P(5),P(7))*| If min(*P(0),P(2),P(4),P(6)) < min(P(1),P(3),P(5),P (7))*| then $b_2$ = 0; Else $b_2$ = 1

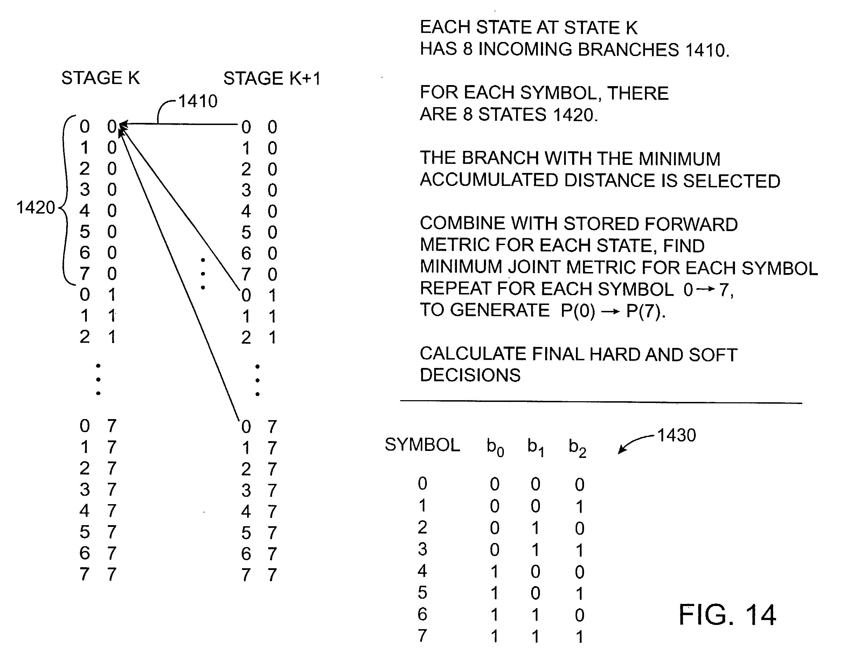

Figure 14 illustrates the above equations. Each state at stage K has 8 incoming branches 1410. For each symbol, there are 8 states 1420. The branch with the minimum accumulated distance is selected and saved as the backward metric at each state. Again, $\tilde{r}_k$ stored during the forward trace may be used for this. This backward trace metric is combined with the stored forward metric for each state. The minimum joint metric for each symbol is found. This is done for each symbol, The hard and soft decisions are then calculated using the above equations.

The underlying rationale for these equations can be seen from chart 1430 in Figure 14. If the symbol is more likely a 0, 1, 2, or 3 than a 4, 5, 6, or 7, then bit $b_0$ is more likely a zero than a one.

The soft scaling factor $\delta$ is provided by the adaptive scaling factor circuit 190 in Figure 1, or similar circuits in other embodiments of the present invention. Let x be the un-scaled soft-decision. The scaling procedure is as follows:

$$\text{If } \delta = 1, \; x = x+(x>>1);$$

$$x = \begin{cases} x >> NSF & \text{if } NSF > 0 \\ x << NSF & \text{if } NSF < 0 \end{cases}$$

$$x=7, \text{ if } x>7.$$

where NSF is the value of $\delta$ stored in a register by the adaptive soft scaling factor circuit 190. in this way, the soft decisions can be scaled by the estimated signal to noise ratio.

The soft scaling factor can be calculated by:

Calculate the gain of the pre-filter: $P_{pre}$ by taking the sum of the squares of F0-F4 provided by the coefficients computer 170 and used by the pre-filter 130 in the receiver of Figure 1.

Get noise variance: $\sigma^2$, for example, using the method above. Then:

Let $P=Q_{scale}\sigma^2 P_{pre}$. P can be represented as:

$$P = b_m 2^m + b_{m-1} 2^{m-1} + \cdots$$

$$\text{Let } shift1 = m-8;$$

$$\text{Let } P_1 = P >> shift1;$$

$$P_1 Q_{space} = b_n 2^n + b_{n-1} 2^{n-1} + \cdots$$

$$Shift2 = n+1;$$

$$Sft = (shift1 + shift2 + 1) >> 1;$$

$$shift\_half = \begin{cases} 0 & \text{if } shift1 + shift2 \;\; is \;\; even \\ 1 & \text{if } shift1 + shift2 \;\; is \;\; odd \end{cases}$$

$$sft = sft-4;$$

$$sft = sft*2 + shift\_half$$

$$\delta = (sft,\ shift\_half)$$

where (*sft, shift_half*) is *sft* and *shift_half* concatenated, and $Q_{scale}$ and $Q_{space}$ are parameters for the desired soft-decision quantization steps in noise s.d, units. Simulations have shown that for a specific embodiment of the present invention, they are optimally set at $(Q_{scale}, Q_{space}) = (4, 3)$. Also in the specific embodiment, the soft decision scaling is done in hardware, while the soft scaling factor is calculated in software.

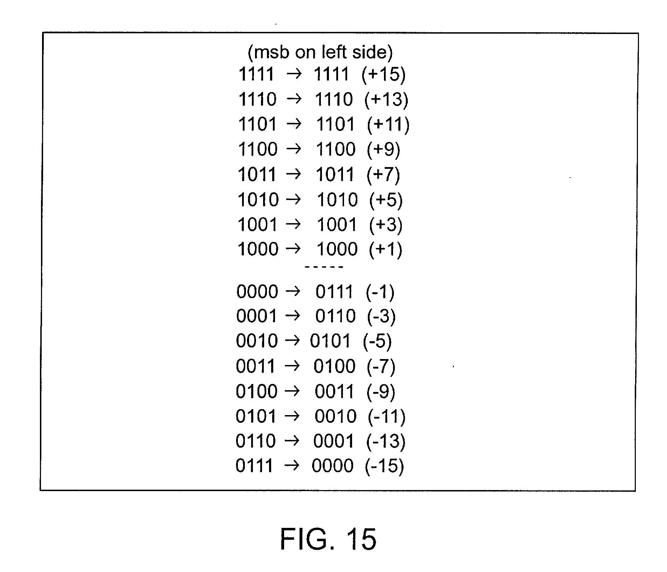

After scaling, the soft decision and hard decision can be converted into a format consistent with a conversion table. Figure 15 provides a table for format mapping that is used by a specific embodiment of the present invention. The third column in the table indicates the actual metric values used internally by the convolutional decoder. The conversion table illustrates that no erasures (zero convolutional decoder metric) are generated in the convolutional decoder by the equalizer soft decisions. The three soft decisions, with their hard decisions, may be concatenated or otherwise combined to form a 12 bit soft decision representing an 8PSK symbol. The resulting word may be saved in an output memory.

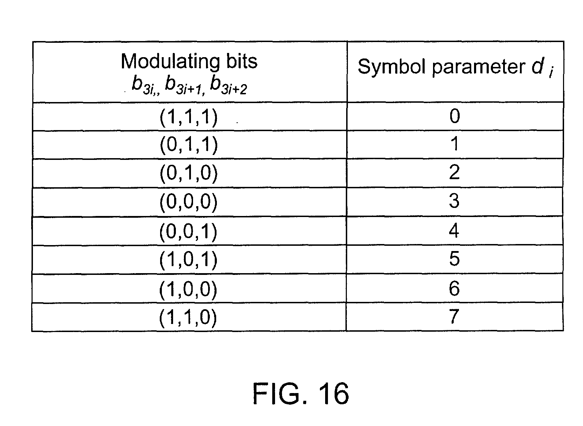

The hard decision bits may be converted back to BASK to calculate the branch metrics at the next stage of the trellis during the backward trace. This can be done in two steps. First, the bits are mapped to a symbol as indicated by Figure 16.

Second, the modulating bits are Gray mapped in groups of three into 8PSK symbols by

$$a_i = e^{j2\pi d_i/g}$$

where $d_i$ is given by Figure 16, and $a_i$ is a complex variable. Accordingly, this is converted to an integer for use in an actual implementation. This may be done using a look-up table;

$$M8PSK = \{7, 5, 0, -5, -7, 0, 5\}$$

$$a_i^I = M8PSK[d_i]$$

$$a_i^Q = M8PSK[(d_i + 6)\%8]$$

The foregoing description of specific embodiments of the invention has been presented for the purposes of illustration and description. It is not intended to be exhaustive or to limit the invention to the precise form described, and many modifications and variations are possible in light of the teaching above. The embodiments were chosen and described in order to best explain the principles of the invention and its practical applications to thereby enable others skilled in the art to best utilize the invention in various embodiments and with various modifications as are suited to the particular use contemplated.

**Claims**

**1.**   A method of receiving data comprising:

receiving input data with an equalizer;
performing forward metric computations using a reduced state trellis; performing backward metric computations using the reduced state trellis,
adding the forward metric computations to the backward metric computations to generate a joint metric; and
selecting a joint metric for each symbol in the reduced state trellis.

**2.**   The method of claim 1 further comprising:

determining the value of a hard decision by comparing a first joint metric for a first symbol to a second joint metric for a second symbol.

**3.**   The method of claim 2 further comprising:

determining the value of a soft decision by subtracting a first joint metric for a first symbol from a second joint metric for a second symbol.

4. The method of claim 1 wherein the forward metric computations comprise:

   performing tentative tracebacks to generate tentative hard decisions.

5. A method of receiving data comprising:

   receiving input data with an equalizer;
   determining an estimated signal to noise ratio;
   generating a soft decision indicating the reliability of a hard decision; and
   scaling the soft decision with the estimated signal to noise ratio.

6. The method of claim 5 wherein the soft decision is generated by:

   performing a forward trace using a trellis and storing resulting metrics for each state;
   performing a backward trace using the trellis and combining a resulting metric at each state with the store forward trace metric for that state;
   selecting a minimum joint metric for each symbol in the trellis; and
   determining the value of the soft decision by subtracting a first joint metric for a first symbol from a second joint metric for a second symbol.

7. An integrated circuit comprising:

   an equalizer configured to receive input data and provide hard and soft decisions; and
   an adaptive scaling factor circuit coupled to the equalizer,

   wherein the adaptive scaling factor circuit provides a signal related to an estimated signal to noise ratio, and wherein the equalizer scales the soft decisions based on the provided signal.

8. The integrated circuit of claim 7 further comprising:

   a noise variance circuit coupled to the adaptive scaling factor circuit,

   wherein the noise variance circuit provides a noise variance to the adaptive scaling factor circuit.

FIG. 1

INITIALIZE EQUALIZER — 210

TRACE FORWARD
- FORWARD TRELLIS METRICS
-TENTATIVE TRACEBACK
-TENTATIVE HARD DECISION
— 220

TRACE BACKWARD
- BACKWARD TRELLIS METRICS
-SOFT DECISION COMPUTATION
-SCALE SOFT DECISION
-FORMAT TRANFORMATION
-CALCULATE 8 PSK SYMBOL
— 230

FIG. 2

310

| Parameter | Word Sizes |
|---|---|
| Mode bit indicates burst length N, N = 62 EDGE | 2 bit x 1 |
| Received data<br>  LH input data, $r_n{}^I$, $r_n{}^Q$ n=1 to N<br><br>  RH input data, $r_n{}^I$, $r_n{}^Q$ n=1 to N | 16 bits x 62 x 2<br>16 bits x 62 x 2 |
| Trellis initial states and masks:<br>  LHS initial state<br>    Initial/tentative decision feedback modulated symbols<br>  RHS initial state<br>    Initial/tentative decision feedback modulated symbols | 10 x 4-bit<br><br>10 x 4-bit |
| S-parameters { $s_i{}^I$, $s_i{}^Q$ } , i = 0,1,...,5 | 9 bits x 12 |
| Soft output metric scale factor | 6 bits x 1 |
| Total | |

# FIG. 3

INITIALIZE ACCUMULATED
DISTANCE METRICS (64 STATES) — 410

CALCULATE BRANCH
METRICS FOR EACH STATE — 420

CALCULATE ACCUMULATED
METRICS FOR EACH STATE — 430

GO TO
NEXT
STAGE

SELECT BRANCH AT EACH
STATE HAVING SMALLEST
METRIC (64 BRANCHES) — 440

PARTIAL TRACE BACK AND
TENTATIVE HARD DECISION — 450

No — LAST STAGE OF TRELLIS? — Yes — DONE

FIG. 4

FIG. 5

PREVIOUS CHANNEL STATE

CURRENT CHANNEL STATE

$\overset{\frown}{630}$    $\overset{\frown}{632}$    $\overset{\frown}{634}$        $\overset{\frown}{610}$    $\overset{\frown}{620}$

$\tilde{a}_{k-5}$    $\tilde{a}_{k-4}$    $\tilde{a}_{k-3}$    $a_{k-2}$    $a_{k-1}$    $r_k$

640 —

USED TO CALCULATE

$\tilde{r}_k = S_5\,\tilde{a}_{k-5} + S_4\,\tilde{a}_{k-4} + S_3\,\tilde{a}_{k-3}$

650

FIND STATE
HAVING MINIMUM
ACCUMULATED
DISTANCE

660

FIND CURRENT
HARD DECISION
AT THAT STATE

670

684      682      680     TRACE BACK
TO FIND

$\tilde{a}_{k-4}$     $\tilde{a}_{k-3}$     $\tilde{a}_{k-2}$

690 —

USED TO CALCULATE

$\tilde{r}_{k+1} = S_5 \cdot \tilde{a}_{k-4} + S_4\,\tilde{a}_{k-3} + S_3\,\tilde{a}_{k-2}$

# FIG. 6

5

FIG. 7

FIG. 8

| 15 | 14-12 | 11-9 | 8-6 | 5-3 | 2-0 |
|---|---|---|---|---|---|
| state 0 | x | $\widetilde{d}_{k-4}^{\,0}$ | $\widetilde{d}_{k-3}^{\,0}$ | $\widetilde{d}_{k-2}^{\,0}$ | $\widetilde{d}_{k-1}^{\,0}$ | $\widetilde{d}_{k}^{\,0}$ |
| state 1 | x | $\widetilde{d}_{k-4}^{\,1}$ | $\widetilde{d}_{k-3}^{\,1}$ | $\widetilde{d}_{k-2}^{\,1}$ | $\widetilde{d}_{k-1}^{\,1}$ | $\widetilde{d}_{k}^{\,1}$ |
| state 2 | x | $\widetilde{d}_{k-4}^{\,2}$ | $\widetilde{d}_{k-3}^{\,2}$ | $\widetilde{d}_{k-2}^{\,2}$ | $\widetilde{d}_{k-1}^{\,2}$ | $\widetilde{d}_{k}^{\,2}$ |
| ⋮ | | | ...... | | | |
| state 6 | x | $\widetilde{d}_{k-4}^{\,63}$ | $\widetilde{d}_{k-3}^{\,63}$ | $\widetilde{d}_{k-2}^{\,63}$ | $\widetilde{d}_{k-1}^{\,63}$ | $\widetilde{d}_{k}^{\,63}$ |

# FIG. 9A

| I | $\widetilde{a}_{k-4}^{\,I}$ | $\widetilde{a}_{k-3}^{\,I}$ | $\widetilde{a}_{k-2}^{\,I}$ | $\widetilde{a}_{k-1}^{\,I}$ | $\widetilde{a}_{k}^{\,I}$ |
|---|---|---|---|---|---|
| Q | $\widetilde{a}_{k-4}^{\,Q}$ | $\widetilde{a}_{k-3}^{\,Q}$ | $\widetilde{a}_{k-2}^{\,Q}$ | $\widetilde{a}_{k-1}^{\,Q}$ | $\widetilde{a}_{k}^{\,Q}$ |

# FIG. 9B

FIG. 10

EP 1 292 077 A2

FIG. 11

INITIALIZING ACCUMULATED
DISTANCE METRICS (64 STATES) — 1210

CALCULATE BRANCH METRICS
FOR EACH STATE — 1220

CALCULATE ACCUMULATED
METRICS FOR EACH STATE — 1230

GO TO
NEXT
STAGE

1285

COMPUTE SOFT DECISIONS
FOR EACH SYMBOL

- ADD FORWARD AND
  BACKWARD TRACE METRICS
- SELECT MINIMUM
- CALCULATE HARD DECISION
  AND RELIABILITY

— 1240

SCALE SOFT DECISIONS — 1250

TRANSFORM FORMAT — 1260

CALCULATE 8PSK SYMBOL — 1270

LAST STAGE?  YES  DONE

1280  1290

# FIG. 12

tail bits

t=58  Received
      symbols

| 7 | 7 | 7 | a0 | a1 | ... | $d_{56}$ | $d_{57}$ | $d_{58}$ |

make final hard/
soft decision on
symbol $d_{57}$

t=57  Received
      symbols

| 7 | 7 | 7 | $d_0$ | $d_1$ | ... | $d_{56}$ | $d_{57}$ | $d_{58}$ |

make final hard/
soft decision on
symbol $d_{56}$

t=56  Received
      symbols

| 7 | 7 | 7 | $d_0$ | $d_1$ | ... | $d_{56}$ | $d_{57}$ | $d_{58}$ |

make final hard/
soft decision on
symbol $d_{55}$

$\vdots$

t=1   Received
      symbols

| 7 | 7 | 7 | $d_0$ | $d_1$ | ... | $d_{56}$ | $d_{57}$ | $d_{58}$ |

make final hard/
soft decision on
symbol $d_0$

# FIG. 13

EACH STATE AT STATE K
HAS 8 INCOMING BRANCHES 1410.

FOR EACH SYMBOL, THERE
ARE 8 STATES 1420.

THE BRANCH WITH THE MINIMUM
ACCUMULATED DISTANCE IS SELECTED

COMBINE WITH STORED FORWARD
METRIC FOR EACH STATE, FIND
MINIMUM JOINT METRIC FOR EACH SYMBOL
REPEAT FOR EACH SYMBOL $0 \rightarrow 7$,
TO GENERATE $P(0) \rightarrow P(7)$.

CALCULATE FINAL HARD AND SOFT
DECISIONS

STAGE K     STAGE K+1

| SYMBOL | $b_0$ | $b_1$ | $b_2$ |
|--------|-------|-------|-------|
| 0 | 0 | 0 | 0 |
| 1 | 0 | 0 | 1 |
| 2 | 0 | 1 | 0 |
| 3 | 0 | 1 | 1 |
| 4 | 1 | 0 | 0 |
| 5 | 1 | 0 | 1 |
| 6 | 1 | 1 | 0 |
| 7 | 1 | 1 | 1 |

1430

FIG. 14

EP 1 292 077 A2

(msb on left side)

1111 → 1111 (+15)
1110 → 1110 (+13)
1101 → 1101 (+11)
1100 → 1100 (+9)
1011 → 1011 (+7)
1010 → 1010 (+5)
1001 → 1001 (+3)
1000 → 1000 (+1)

- - - - -

0000 → 0111 (-1)
0001 → 0110 (-3)
0010 → 0101 (-5)
0011 → 0100 (-7)
0100 → 0011 (-9)
0101 → 0010 (-11)
0110 → 0001 (-13)
0111 → 0000 (-15)

# FIG. 15

| Modulating bits $b_{3i}, b_{3i+1}, b_{3i+2}$ | Symbol parameter $d_i$ |
|---|---|
| (1,1,1) | 0 |
| (0,1,1) | 1 |
| (0,1,0) | 2 |
| (0,0,0) | 3 |
| (0,0,1) | 4 |
| (1,0,1) | 5 |
| (1,0,0) | 6 |
| (1,1,0) | 7 |

FIG. 16